# EUROPEAN PATENT APPLICATION

(11) **EP 4 296 969 A1**
(43) Date of publication of application: **27.12.2023**
(21) Application number: 22180501.3
(22) Date of filing: 22.06.2022
(51) Int. Cl.: G06V 10/82, G06V 20/13, G06V 20/17, G06V 20/10

(54) **METHOD AND SYSTEM FOR DETERMINING A BOUNDARY OF AN AGRICULTURAL FIELD FROM OPTICAL MULTISPECTRAL DATA**

(71) Applicant: Panopterra UG (haftungsbeschränkt), 64293 Darmstadt (DE)
(72) Inventor: WAGNER, Matthias P., 64297 Darmstadt (DE); TARAVAT, Alireza, 44623 Herne (DE)
(74) Representative: Maiwald GmbH

(57) **Abstract**

The invention relates to the field of evaluating an agricultural field, particularly to a computer-implemented method for determining a boundary (75) of the at least one agricultural field (70) for controlling geospatial applications. The method comprises the steps of:
obtaining a plurality of optical satellite data as primary images (35), the primary images (35) including a representation of the at least one agricultural field (70);
consolidating the plurality of primary images (35) to an intermediate image (45), the intermediate image (45) comprising a plurality of elements (47);
classifying each element (47) of the intermediate image (45) as a boundary element and/or as a non boundary element; and
constructing a representation of the boundary (65) of the agricultural field (70) in a polygon-based format, based on connecting at least a subset of the boundary elements, as a basis for geospatial applications, particularly for controlling agricultural machinery.

## Description

### Field of the Invention

The invention relates to the field of evaluating an agricultural field, particularly to a method for determining its boundary. The invention further relates to methods for training artificial neural nets (ANNs) related to the method. The invention also relates to a program element, to a computer-readable storage medium, and to a use.

### Background

Many geospatial applications in agriculture, such as precision farming or regional landscape mapping, rely on knowledge about individual fields, e.g. on their locations, sizes and shapes. However, that kind of data is often not accessible to users and/or to businesses, and it may be very time-consuming and costly to obtain said data, e.g. from land registers of several (possibly de-centralized) offices, and/or to gather said data via manual annotation, for example by doing measurements on those fields. This may be especially difficult and/or costly on larger scales, e.g. for larger regions, states, or even countries.

### Description

It is an objective of the invention to provide a method for determining at least some aspects of an agricultural field, particularly of its location, size, and/or its shape. This objective is achieved by the subject-matter of the independent claims. Further embodiments are evident from the dependent claims and the following description.

One aspect relates to a computer-implemented method for determining a boundary of at least one agricultural field for controlling geospatial applications, the method comprising the steps of:
obtaining a plurality of optical satellite data as primary images, the primary images including a representation of the at least one agricultural field;
consolidating the plurality of primary images to an intermediate image, the intermediate image comprising a plurality of elements;
classifying each element of the intermediate image as a boundary element and/or as a non-boundary element; and
constructing a representation of the boundary of the agricultural field in a polygon-based format, based on connecting at least a subset of the boundary elements, as a basis for geospatial applications, particularly for controlling agricultural machinery.

The boundary of the agricultural field may include several attributes of this field, particularly a location, a size, and/or a shape of the agricultural field. The boundary may separate one agricultural field from another one. The boundary may be determined, identified, and/or defined by a limitation means, such as a fence, by a non-agricultural item, e.g. a street, a water body of any kind (e.g. a lake, river or creek), and/or by a change of agricultural products that grow on and/or in the field.

The method may comprise to determine the boundaries of a plurality of agricultural fields. The method may be a basis and/or a direct or indirect input for a plurality of technical applications, particularly for controlling geospatial applications, for instance for controlling a sowing, a fertilization, an irrigation, and/or a harvesting of agricultural products, which may be at least partly automated. The method may also be used for determining a type and/or a product of an agricultural field. Besides, the method may be used for commercial applications, e.g. for agricultural production prediction, yield estimation, risk assessment or pest/disease detection by (re)insurance, geo-information, business consulting, agriculture or analytics companies or institutions.

The method is based on obtaining a plurality of optical satellite data as primary images. The satellite data may be obtained from one or several satellites. Examples comprise, but are not limited to data from Sentinel-2, WorldView, Planetscope, SkySat, Pleiades, and/or from further satellites. The selection of the satellite, whose data are to be used, may depend, e.g., on the availability and/or the precision of the satellite data. For some regions, one satellite's data may be more precise and/or otherwise more useful than data from another satellite. Data from more than one satellite may be used. As an example, multispectral optical remote sensing imagery data from the Sentinel-2 satellite may be used as primary images (or "raw data") and/or may be a basis for the primary images. The satellite data may come, e.g., with a spatial resolution of 10 m. The satellite data may comprise data of visible and near-infrared bands. The satellite data may comprise data from one moment or from a plurality and/or a sequence of moments. The temporal distance between two sets on data may depend on the satellite. For instance, some satellites obtain data of one agricultural field - or of the region of said agricultural field - every 5 days, every 9 days, and/or in another temporal distance. The satellite data may be taken during a regions' main agricultural growing season. In this period, observations may advantageously not only represent the actual conditions during the agricultural cropping season, but may also facilitate distinguishing between different land covers due to varying growth stages of different vegetation types. Using satellite remote sensing imagery as the basis for primary images may have advantages, e.g. over other types of observations, because it may cover large areas, it may allow repeated observations throughout time, and it may ensure fairly consistent observation conditions.

The primary images may be achieved by no pre-processing of the satellite data ("directly"), by a minor pre-processing (e.g. with format changes), and/or by several steps of pre-processing. The pre-processing may comprise an atmospheric correction or a dehazing. The primary images may include a representation of one agricultural field, and/or may include a plurality of agricultural fields. The optical satellite data and/or the primary images may be represented in a pixel-based format, with, e.g., one pixel corresponding to a spatial resolution of 10 m. The optical satellite data and/or the primary images may be available as one piece, or as a plurality of parts or so-called "tiles".

The plurality of primary images may be consolidated to an intermediate image. The intermediate image may comprise a plurality of elements. Each element may correspond to a pixel of one or more primary images. The consolidating may be done, e.g., by geolocating and/or by overlaying each pixel of one or more of the primary images. The primary images that are used for overlaying may be correspond to satellite data of one or several moments and/or to one or several of the multispectral satellite data. The pixels of the several satellite data may not necessarily correspond to pixels of the same resolution; for instance, one pixel of one primary image may correspond to a spatial resolution of 20 m, and one pixel (corresponding to the same location) of another primary image may correspond to a spatial resolution of 10 m. The consolidating may be done, e.g., by algorithmic means and/or by using a trained artificial neural net (ANN).

The classifying of each element of the intermediate image may result in classifying the element of the intermediate image as a boundary element and/or as a non-boundary element. The "and/or" may indicate that a probability of belonging to a class is possible. For instance, an element may be classified as "80 % boundary element, 20 % non-boundary element". Further classifying is possible, particularly dividing the class "non-boundary element" into several sub-classes, e.g. into a class "cropland", "non-agricultural", and/or further sub-classes.

Then, based on connecting at least a subset of the boundary elements, a representation of the boundary of the agricultural field is constructed, particularly in a polygon-based format. The representation of the boundary of the agricultural field may comprise the location, size, and/or shape of the agricultural field. The fields may be mapped as individual objects in a vector format, such as ESRI Shapefile, GeoJSON, KML/KMZ, GML, GeoPackage, and/or in a similar format. The polygon-based format has many advantages over other kind of representations. For example, the polygon-based format is scalable and, thus, easily adaptable to any kind of maps that use the boundary. The representation of the boundary of the agricultural field may advantageously be suitable for assigning attributes, analysing them by further programs, and/or using in further processes and/or in geo-information and remote sensing workflows. The polygon-based representation of the boundary may be a basis and/or a direct or indirect input for a plurality of technical applications, particularly for controlling geospatial applications, for instance for controlling a sowing, a fertilization, an irrigation, and/or a harvesting of agricultural products, which may be at least partly automated.

In various embodiments, the method further comprises the step of classifying each non-boundary element as at least one of: agricultural area element, non-agricultural area element, as urban area element, as forest element, as water body element, as background element, as noise element, as undefined element and/or as other element. This classifying may be done in parallel, following to, or may be done instead of the classifying as a boundary element and/or as a non-boundary element (see above).

In various embodiments, the classifying includes to attribute each classified element with a probability of each class. The classifying may comprise of attributing each element with a probability to belonging to one or more classes. For further processing, a threshold may be set for a "final" classifying. The threshold may be an absolute threshold, e.g. "greater or equal 50 %", or a relative threshold, e.g. "highest probability" and/or "at least with 10 % higher probability than the next-probable class".

In various embodiments, the classifying is performed by a first trained artificial neural net, ANN as described above and/or below.

In various embodiments, the optical satellite data comprise data, particularly multispectral data, at least of the Sentinel-2 bands B02, B03, B04, B05, B06, B07, B8A and/or B08, or similar wavelength bands from other optical multispectral satellite sensors. Examples may comprise WorldView-3: Blue, Green, Yellow, Red, Red edge, Near-IR1, Near-IR2, SWIR-1 to SWIR-8; Planetscope: Blue, Green, Red, RedEdge, NIR; SkySat: Blue, Green, Red, NIR; Pleiades: B0, B1, B2, B3. The optical satellite data comprise primary images of a sequence of moments. In some embodiments, the "optical satellite data" may comprise optical data from airplanes and/or from drones. The data may have a spatial resolution of, e.g., 20 m, 10 m, 5 m and/or higher resolutions. The spatial resolution may depend on the satellite and/or the band where the data originate from. The sequence of moments may be equidistant. For instance, Sentinel-2 satellites are phased 180 degrees from each other on the same orbit. This allows a 10-day revisit cycle to be completed in 5 days. Data from airplanes and/or from drones may be captured in another frequency.

In various embodiments, the method further comprises the step of: before the consolidating, pre-processing the primary images, wherein the pre-processing comprises at least one of: image pre-selection, atmospheric correction, dehazing, co-location, resampling, reprojection, subsetting, mosaicking and/or orthorectification. The image pre-selection may comprise to select, e.g., only images with low or with no clouds. During and/or before the consolidating, the images may be grouped into multi-temporal stacks, i.e. obtained at several moments. This may advantageously mitigate the effect of having many clouds and, thus, may contribute to increase the number of usable observations as well as flexibility and robustness of the approach

In various embodiments, the primary images and/or the intermediate images are divided into tiles. Tiling may include a spatially dividing of input images and/or labels into patches - e.g. into evenly sized, overlapping patches - that are fed to the subsequent step of boundarydetection. The output tiles produced by the model may be combined analogously to the tiling procedure applied before, to reconstruct a full prediction map of the same size as the original input images. Overlapping of patches may advantageously be introduced to contribute to a smoother result when reconstructing the processed patches to a full output image. The tiling may be applicable to the capturing, the consolidating, the classifying and/or the constructing step.

In various embodiments, the method further comprises the step of: before or during the consolidating, geo-locating the primary images and/or the intermediate image, and/or attributing the primary images and/or the intermediate image with ground truth labels. The ground truth labels may comprise "official" boundaries, e.g. from an office of a country (etc.) and/or of the corresponding region. Examples may comprise the so-called Land Parcel Identification System of the European Union. In some embodiments, the attributing the primary images and/or the intermediate image with ground truth labels may be done manually.

In various embodiments, the consolidating comprises at least one of: overlaying multispectral and/or temporally sequential data of the primary images; averaging the multispectral and/or temporally sequential data of the primary images. To group images correctly into multi-temporal stacks, they may have been geo-located and overlaid before. These steps may be achieved by subsetting all corresponding images to the intersection of their footprints. The result is a set of images with the same dimensions covering the same geographic area.

Then, the so-called "multi-image blending" may be performed, i.e. multiple images are blended to a single input via pixel-wise averaging before being fed to the detection model, i.e. before the classifying step ("Mode A"). The input to the model itself may be considered as a "single blended image". By averaging multiple images pixel-wise, a blended dataset with eliminated or at least drastically reduced contaminations may be obtained. Blending may be performed by taking a mean value, e.g. an (arithmetic) average value, of each one of the primary images considered, and thus producing a single "multi-band image" that is to be fed to the model. This mode may be computationally fast, because the blending may be done, e.g., via a simple matrix computation beforehand.

In various embodiments, the consolidating comprises: applying a weighted attention mask to at least one of the intermediate images, wherein the weighted attention mask is an output of a second trained artificial neural net, ANN. For this, preferably a multi-temporal input may be used, i.e. the full multi-temporal image stack is used as the input to the model which then learns an adaptive blending ("Mode B"). For handling multi-temporal inputs, an "image blending module" may be used, which takes multiple images from different acquisition times as an input, and outputs a weighted attention mask that is applied to the original imagery.

The intention is that, by means of a training, the model itself implicitly learns to ignore contaminations - such as clouds, etc. - and, based on this, to pay more or less "attention", respectively, to different parts of each image. The "attention" may depend on how informative each image is for the given task. For example, if in a certain region of an image field boundaries are difficult to detect, the model implicitly learns to pay more "attention" - e.g. to attribute a higher weight - to observations in another part of the image where detection turned out to be easier. This allows learning of a powerful image blending operation.

The image blending module 40B may take multiple images from different acquisition times as input, and outputs a weighted attention mask that is applied to the original imagery. The model learns, during training, (a) to ignore contaminations, e.g. clouds, shadows; and (b) to pay more or less "attention" to different parts of each image, depending on the primary image and/or on a part of said image, and/or depending on how informative each image is for the given task. For example, if in a certain region of an image field boundaries are difficult to detect - e.g. because all vegetation is already fully grown and rather homogeneous -, the model learns to pay more attention to observations in another image where detection is easier. For example, to pay more attention on a primary image - e.g. acquired at an earlier moment - on which, e.g., lushness of vegetation differs more significantly.

In various embodiments, the constructing of the boundary of the agricultural field comprises at least one of:
selecting the boundary elements of the intermediate image;
dividing the intermediate image, by means of the boundary elements, into the at least one agricultural field;
connecting, for each agricultural field, the boundary elements to a boundary polygon; and/or geo-locating the boundary polygon.

The selecting of the boundary elements may include to apply a probability threshold to each element, e.g. "52 %, for a boundary element", above which the element is considered as boundary element. A local thresholding may apply, e.g. for each define part of the intermediate image.

The dividing may comprise to define a region inside the agricultural field from regions outside the field, thus leading to a local field segmentation. In other words, from the inputs described above individual field segments are extracted. This may be achieved by means of, e.g., the following operations: (1) The boundary probability map is converted to a binary map distinguishing boundary and non-boundary elements (or pixels). This is done via local thresholding of the boundary probability map. (2) Potential candidates for field polygon locations are extracted from this binary map. This is done via keypoint detection algorithms, e.g. by finding local maxima in an inverse distance transform of the binary boundary map. In this stage, incorporating information from the cropland probability layer ensures that only those candidates are considered that are actually part of agricultural areas. (3) For each candidate polygon location, a local segment is extracted based on the binary field boundary map. This may be achieved via floodfill segmentation. Again, an (e.g. additional) cropland probability map may be used to discard any segments that are not primarily agricultural areas.

An aspect relates to a computer-implemented method for building a first artificial neural net, ANN, for classifying an element of an intermediate image. The method comprises the steps of:
geo-locating an intermediate image of the at least one agricultural field;
providing a cropland reference map related the agricultural field; and
matching the cropland reference map to the agricultural field.

The matching may be based on a ground-truth map or cropland reference map, for instance based on the Land Parcel Identification System of the European Union, which is available in vector format ("ground truth label preparation"). For this, datasets of public agencies and/or governmental institutions linked to the Land Parcel Identification System of the European Union or similar national efforts may be used as labels for model training. The data, e.g. of the "Land Parcel Identification System", may be provided in vector format (or, for other sources: may be transformed into vector format) and may contains agricultural parcels in a country or administrative domain as individual polygons. This data can, then, be matched with the satellite imagery, based on geospatial location. First, only fields within a certain image extent are selected. Then, the vector data is rasterized in two steps: the boundaries of polygons are rasterized with a spatial buffer to obtain a field boundary reference map, the polygons themselves are rasterized to obtain a cropland reference map. Any region outside a pre-selected ("relevant") area is masked out. As a result, the first trained artificial neural net may be used for classifying each element of the intermediate image as a boundary element and/or as a non-boundary element, and/or as another class. The classifying elements may be attributed with a probability of being in this class (and/or in another class).

An aspect relates to a computer-implemented method for building a weighted attention mask, particularly by using a second artificial neural net, ANN, the method comprising the steps of: providing a first intermediate image of the at least one agricultural field with a contamination; providing a second intermediate image of the at least one agricultural field without the contamination; and
building the weighted attention mask, by attributing each difference between the first intermediate image and the second intermediate image with a low weight of the weighted attention mask.

The "contamination" may comprise, e.g., clouds or shadows. Special measures may become necessary for hard-to-detect boundaries, i.e. boundaries that may be hard to detect because all vegetation is fully grown and, thus, may grow over the boundaries.

An aspect relates to a program element for executing the method as described above and/or below, when running the program element on a processing unit.

An aspect relates to a computer-readable storage medium where a computer program or a computer program product as described above is stored on.

An aspect relates to a use of a method as described above and/or below for geospatial applications, particularly for crop type classification, pest/disease detection, risk assessment, plant health monitoring, yield estimation, and/or for crop management, particularly for controlling seed, fertilization, irrigation, and/or harvest planning.

For further clarification, the invention is described by means of embodiments shown in the figures. These embodiments are to be considered as examples only, but not as limiting.

### Brief Description of the Drawings

The drawings depict:
- **Fig. 1**: schematically a data processing workflow according to an embodiment;
- **Fig. 2**: schematically a consolidating step according to an embodiment;
- **Fig. 3a** - **3c**: schematically examples of ground truth labels according to an embodiment;
- **Fig. 4a** and **4b**: schematically classifying steps according to an embodiment;
- **Fig. 5**: schematically a field polygon extraction flowchart according to an embodiment;
- **Fig. 6a** - **6c**: schematically examples of outputs according to an embodiment;
- **Fig. 7 -9**: flow diagrams according to an embodiment.

### Detailed Description of Embodiments

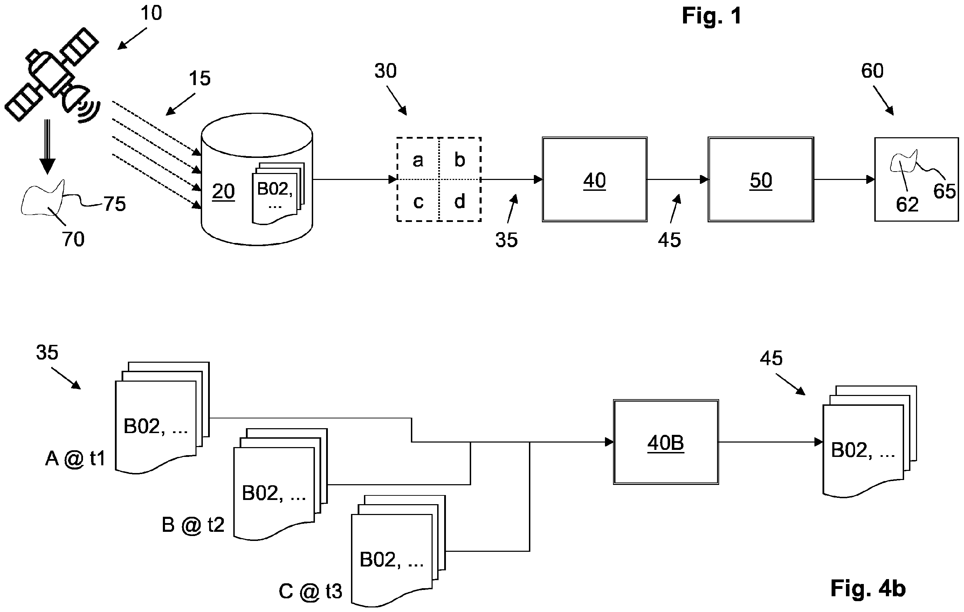

**Fig.** 1 shows schematically a data processing workflow according to an embodiment. A plurality of optical satellite data 15 may be obtained from a satellite 10. The satellite 10 may observe, among others, at least one agricultural field 70 with a boundary 75. The satellite 10 may, e.g., be a Sentinel-2 satellite, which may provide satellite data 15 of the at least one agricultural field 70 in a plurality of spectra. For instance, satellite data 15 may be provided in visible and near-infrared bands, such as the B02, B03, B04, B08 and other bands. The spatial resolution may differ from one band to another (or may be the same). The multispectral satellite data 15 may be stored in a database 20. The multispectral satellite data 15 may comprise data of several moments, e.g. satellite data 15 of the agricultural field 70 of every tenth day. The data may be available and/or may be extracted from the database 20 as tiles 30a - 30d. The data from the database 20 and/or the tiles 30a - 30d may be available as primary images 35, wherein the primary images 35 include a representation of the at least one agricultural field 70. The plurality of primary images 35 are consolidated to an intermediate image 45 in a consolidation module 40. The intermediate image 45 may comprise a plurality of elements 47 (e.g. pixels). In a classification module 50, each element 47 of the intermediate image 45 is classified as a boundary element, as a non-boundary element, and/or as a further element. Then, in a representation module 70, a representation of the boundary 65 of the agricultural field 70 in a polygon-based format is constructed and may be displayed, output and/or processed otherwise, e.g. as a basis for geospatial applications, particularly for controlling agricultural machinery.

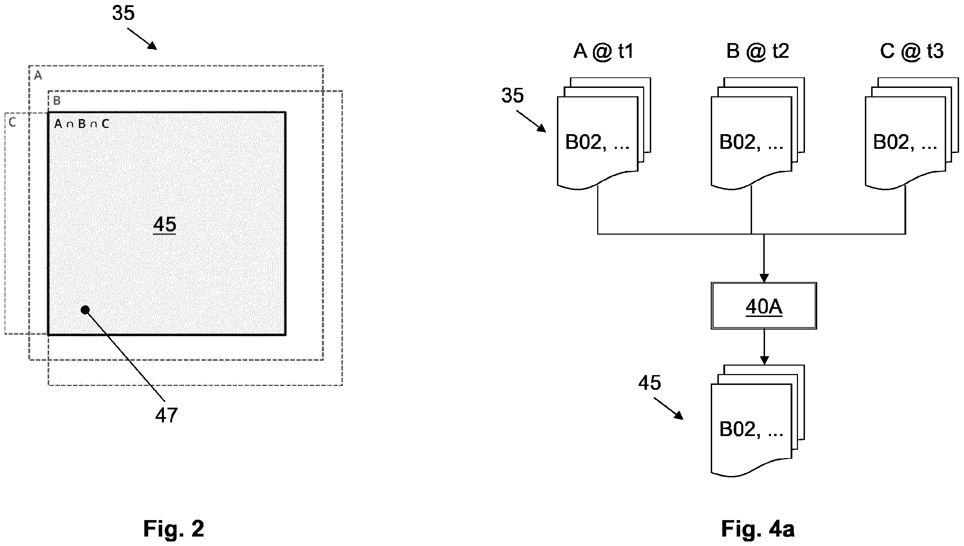

Fig. 2 shows schematically a consolidating step of the primary images 35 (see Fig. 1) according to an embodiment. The primary images 35 may be available as multispectral and/or as multi-temporal satellite data 15. The primary images 35 may be geo-located, so that geo-located data of each one of the primary images 35 A, B, and C are available. Then, the primary images 35 A, B, and C are overlaid, according to their geo-location. This may result in the intermediate image 45, with elements 47 (e.g. pixels) of the intermediate image.

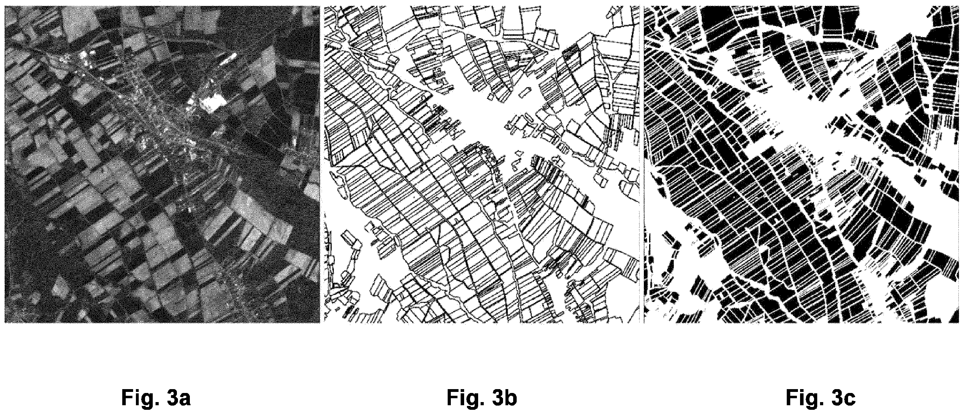

Fig. 3a - 3c shows schematically examples of ground truth labels according to an embodiment. The ground truth labels may be used for training a first artificial neural net (ANN) 50, which may be used in a classification module 50 (see **Fig. 1****).** For this training, Datasets of public agencies and governmental institutions linked to the Land Parcel Identification System (LPIS) of the European Union or similar national offices may be used. The data may be provided in a vector-based format (or transformed into it). Said data may contain all agricultural land parcels in a country or in a administrative domain as polygons, particularly as individual polygons for each one of the parcels. This data is matched with the satellite imagery based on geospatial location. First, only those fields within a certain image extent (which may at least the filed) are selected. Then, the vector data is rasterized in two steps: (1) The boundaries of polygons are rasterized with a spatial buffer, e.g. 5 m to 10m, to obtain a field boundary reference map. (2) The polygons, i.e. their areas, are rasterized to obtain a cropland reference map. Any region outside the study area - e.g. where no labeling is available - is masked out. **Fig. 3a** is an image of a Sentinel-2 true colour composite, which may be available in "natural" colours, e.g. wheat fields in yellow, grass in green, etc. **Fig. 3b** shows rasterized field boundaries, based on the image of **Fig. 3a. Fig. 3c** shows rasterized cropland area, based on the image of **Fig. 3a** and the field boundaries of **Fig. 3b****.** The field boundary detection process may be handled by means of a deep convolutional neural network performing semantic segmentation on the input imagery. Good results could be achieved with convolutional neural networks of encoder-decoder structure, e.g. ResUNet, and/or by using other architectures, e.g. HRNet. The neural network produces a multilayered annotated map, which predicts probabilities of different classes for each pixel in the image. The output of the model may have the same spatial dimensions (height and width) as the input. The output may comprise multiple classes comprising, e.g., following information: (1) Field boundary: probability of a pixel being part of a boundary delineating agricultural fields. (2) Cropland: probability of a pixel being part of an agricultural area outside of immediate boundaries, (3) Other land cover: probability of a pixel being part of another non-agricultural land use/land cover type; this may be further distinguished into separate sub-classes (e.g. urban, forest etc.) if necessary. (4) Background: pixels that are not part of any other class (e.g. clouds).

**Fig. 4a** and **4b** shows schematically classifying steps according to an embodiment. **Fig. 4a** may be an example of the so-called "Mode A" method. This method may comprise an overlaying of multispectral and/or temporally sequential data of the primary images 35, e.g. of data A, which are observed at a moment t1, data B, which are observed at a moment t2, data B, which are observed at a moment t3. The data A, B, C are overlaid, e.g. based on geo-location (see **Fig. 2****).** Then, the multispectral and/or temporally sequential data of the primary images 35 are averaged by a consolidation module 40A. This may advantageously lead to a reduction of "contaminations" (e.g. clouds, etc.) of the images.

**Fig. 4b** shows, as an input to an image blending module 40B, multispectral and/or temporally sequential data of the primary images 35, e.g. of data A, which are observed at a moment t1, data B, which are observed at a moment t2, data B, which are observed at a moment t3. The image blending module 40B may be configured to apply a weighted attention mask to at least one of the intermediate images 45.

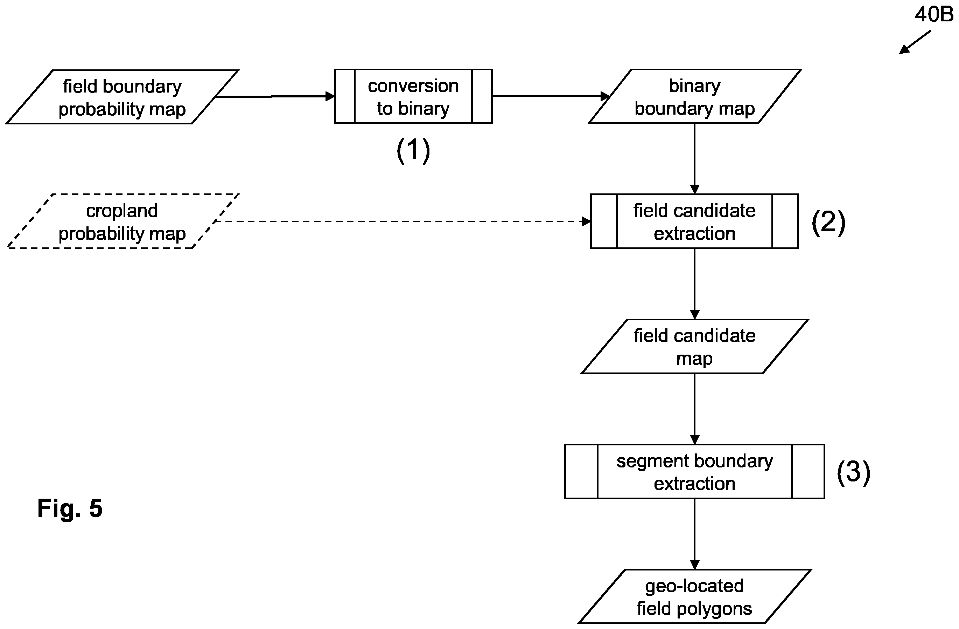

**Fig. 5** shows schematically a field polygon extraction flowchart according to an embodiment. Classifying each element of the intermediate image as a boundary element is considered as a step for determining a boundary of at least one agricultural field. Result is a field boundary probability map, which is transformed to a binary boundary map, by a binary conversion. Other classifications may come, e.g., from a class "cropland" - i.e. an (optionally used) cropland probability map - highlighting the probability of any pixel being part of an agricultural area. The remaining outputs of the previous field boundary detection step may, e.g. for some embodiments, be discarded. The field polygon extraction is largely independent of the exact implementation of the field boundary detection, i.e. it is also possible to use this part of the system separately. As such, probability maps produced by other models or algorithms can be used as well.

From the inputs described above, individual field segments are extracted. This is achieved via the following operations: (1) The boundary probability map is converted to a binary map distinguishing boundary and non-boundary pixels, i.e. classifying each element of the intermediate image as a boundary element and/or as a non-boundary element. This is done via local thresholding of the boundary probability map. (2) Potential candidates for field polygon locations ("seed points") may, then, be extracted from this binary map. This is done via keypoint detection algorithms, e.g. by finding local maxima in an inverse distance transform of the binary boundary map. In this stage, optionally incorporating information from the cropland probability layer may make sure that only those candidates are considered that are actually part of agricultural areas, e.g. to avoid extracting non-agricultural features and reduce the need for post-processing. (3) For each candidate polygon location ("seed point"), a local boundary segment is extracted based on the binary field boundary map. This may be achieved via floodfill segmentation. Again, an additional cropland probability layer can be used to discard any segments that are not primarily agricultural areas; e.g. based on a mean probability threshold. This results in geo-located field polygons, i.e. in a representation of the boundary of the agricultural field in a polygon-based format.

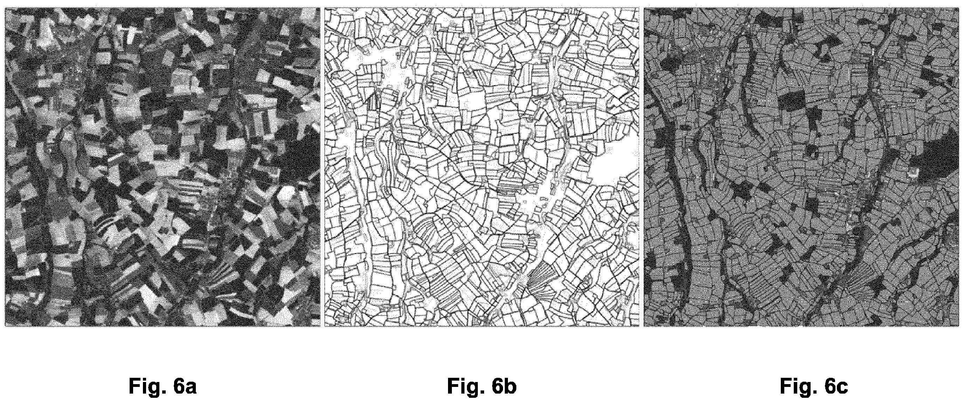

To convert the segmentation output to a set of valid (geospatial) polygons, the segment boundaries may be arranged into closed cycles of unique points. For each segment extracted in the previous step, the pixels at the outer border of the segment are selected and arranged in a logical, closed loop. After this, each field detected in the image is represented by a unique polygon; cf. **Fig. 6b****.** Extracted polygons may be post-processed depending on the application requirements by improving their quality or appearance, e.g. via smoothing, simplification or polygon shrinking/expansion. Furthermore, operations to remove (partial) overlaps between adjacent polygons may be performed. The resulting set of polygons may then be stored as a, e.g. geo-located, vector file, e.g. in a format likd Shapefile, GeoJSON, or similar. **Fig. 6a** - **6c** shows schematically examples of outputs according to an embodiment. **Fig. 6a** is an image of a Sentinel-2 true colour composite, which may be available in "natural" colours. **Fig. 6b** shows a field boundary probability map, applied to **Fig. 6a. Fig. 6c** shows extracted field polygons.

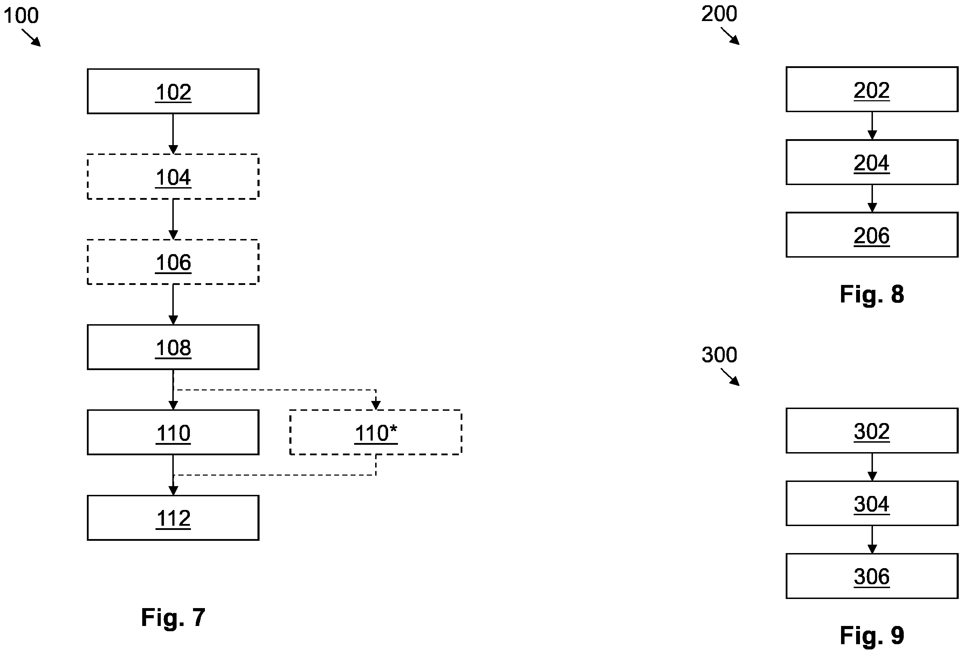

**Fig. 7** shows a flow diagram 100 of a computer-implemented method for determining a boundary 75 of at least one agricultural field 70 (see, e.g., **Fig. 1****)** according to an embodiment. In a step 102, a plurality of optical satellite data is obtained, as primary images 35, the primary images 35 including a representation of the at least one agricultural field 70. In an optional step 104, the primary images 35 are pre-processed, wherein the pre-processing comprises at least one of: image pre-selection, atmospheric correction, dehazing, co-location, resampling, reprojection, subsetting, mosaicking and/or orthorectification. In an optional step 106, the primary images 35 and/or the intermediate image 45 are geo-located, and/or the primary images 35 and/or the intermediate image 45 are attributed with ground truth labels. Steps 104 and 106 may be performed in another sequence, e.g. in parallel.

In a step 108, the plurality of primary images 35 are consolidated to an intermediate image 45, wherein the intermediate image 45 comprising a plurality of elements 47. The elements 47 may be pixels of the intermediate image 45. In a step 110, each element 47 of the intermediate image 45 is classified as a boundary element and/or as a non-boundary element.

In an optional step 110*, each non-boundary element is classified as at least one of: an agricultural area element, a non-agricultural area element, and/or as another element. In a step 112, a representation of the boundary 65 of the agricultural field 70 is constructed in a polygon-based format, based on connecting at least a subset of the boundary elements, e.g. as a basis for geospatial applications, particularly for controlling agricultural machinery.

**Fig. 8** shows a flow diagram 200 of a computer-implemented method for building a first artificial neural net, ANN 50, for classifying an element of an intermediate image 45, according to an embodiment. In a step 202, an intermediate image 45 of the at least one agricultural field 70 is geo-located. In a step 204, a cropland reference map related the agricultural field 70 is provided. In a step 206, the cropland reference map is matched to the agricultural field 70.

**Fig. 9** shows a flow diagram 300 of a computer-implemented method for building a weighted attention mask, particularly by using a second artificial neural net, ANN 40B, according to an embodiment. In a step 302, a first intermediate image 45 of the at least one agricultural field 70 with a contamination is provided. In a step 304, a second intermediate image 45 of the at least one agricultural field 70 without the contamination is provided. In a step 306, the weighted attention mask is built, by attributing each difference between the first intermediate image 45 and the second intermediate image 45 with a low weight of the weighted attention mask.

### List of Reference Symbols

- 10: satellite
- 15: optical satellite data
- 20: database
- 30, 30a - 30d: tiles
- 35: primary images
- 40, 40A, 40B: consolidation module
- 45: intermediate image
- 47: elements of the intermediate image
- 50: classifying module
- 62: representation of the agricultural field
- 65: representation of the boundary
- 70: agricultural field
- 75: boundary
- 100: flow diagram
- 102 - 112: steps
- 200: flow diagram
- 202 - 206: steps
- 300: flow diagram
- 302 - 306: steps

## Claims

1. A computer-implemented method for determining a boundary (75) of at least one agricultural field (70) for controlling geospatial applications, the method comprising the steps of:
obtaining a plurality of optical satellite data as primary images (35), the primary images (35) including a representation of the at least one agricultural field (70);
consolidating the plurality of primary images (35) to an intermediate image (45), the intermediate image (45) comprising a plurality of elements (47);
classifying each element (47) of the intermediate image (45) as a boundary element and/or as a non-boundary element; and
constructing a representation of the boundary (65) of the agricultural field (70) in a polygon-based format, based on connecting at least a subset of the boundary elements, as a basis for geospatial applications, particularly for controlling agricultural machinery.

2. The method of claim 1, further comprising the step of:
classifying each non-boundary element as at least one of:
agricultural area element, non-agricultural area element, forest element, urban area element, water body element, background element, noise element, undefined element and/or other element.

3. The method of claim 1 or 2,
wherein the classifying is performed by a first trained artificial neural net, ANN (50), and/or
wherein the classifying includes to attribute each classified element with a probability of each class.

4. The method any one of the preceding claims,
wherein the optical satellite data comprise data, particularly multispectral data, at least of the Sentinel-2 bands B02, B03, B04, and/or B08, and/or
the optical satellite data comprise primary images (35) of a sequence of moments (t1, t2, t3).

5. The method any one of the preceding claims, further comprising the step of:
before or during the consolidating, pre-processing the primary images (35), wherein the pre-processing comprises at least one of:
image pre-selection, atmospheric correction, dehazing, co-location, resampling, reprojection, subsetting, mosaicking and/or orthorectification.

6. The method any one of the preceding claims,
wherein the primary images (35) and/or the intermediate images (45) are divided into tiles (30a - 30d).

7. The method any one of the preceding claims, further comprising the step of:
before the consolidating, geo-locating the primary images (35) and/or the intermediate image (45), and/or
attributing the primary images (35) and/or the intermediate image (45) with ground truth labels.

8. The method any one of the preceding claims, wherein the consolidating comprises at least one of:
overlaying multispectral and/or temporally sequential data of the primary images (35);
averaging the multispectral and/or temporally sequential data of the primary images (35).

9. The method any one of the preceding claims, wherein the consolidating comprises: applying a weighted attention mask to at least one of the intermediate images (45), wherein the weighted attention mask is an output of a second trained artificial neural net, ANN (40B).

10. The method any one of the preceding claims, wherein the constructing the boundary of the agricultural field (70) comprises at least one of:
selecting the boundary elements of the intermediate image (45);
dividing the intermediate image (45), by means of the boundary elements, into the at least one agricultural field (70);
connecting, for each agricultural field (70), the boundary elements to a boundary polygon; and/or
geo-locating the boundary polygon.

11. A computer-implemented method for building a first artificial neural net, ANN (50), for classifying an element of an intermediate image (45), the method comprising the steps of:
geo-locating an intermediate image (45) of the at least one agricultural field (70);
providing a cropland reference map related the agricultural field (70); and
matching the cropland reference map to the agricultural field (70).

12. A computer-implemented method for building a weighted attention mask, particularly by using a second artificial neural net, ANN (40B), the method comprising the steps of:
providing a first intermediate image (45) of the at least one agricultural field (70) with a contamination;
providing a second intermediate image (45) of the at least one agricultural field (70) without the contamination; and
building the weighted attention mask, by attributing each difference between the first intermediate image (45) and the second intermediate image (45) with a low weight of the weighted attention mask.

13. A program element for executing the method of any one of claims 1 to 10, when running the program element on a processing unit.

14. A computer-readable storage medium where a computer program element according to claim 13 is stored on.

15. Use of a method according to any one of the claims 1 to 10 for geospatial applications, particularly for crop type classification, pest/disease detection, risk assessment, plant health monitoring, yield estimation, and/or for crop management, particularly for controlling seed, fertilization, irrigation, and/or harvest planning.

## Amended claims

### Amended claims in accordance with Rule 137(2) EPC.

1. A computer-implemented method for determining a boundary (75) of at least one agricultural field (70) for controlling geospatial applications, the method comprising the steps of:
obtaining a plurality of optical satellite data as primary images (35), the primary images (35) including a representation of the at least one agricultural field (70);
consolidating the plurality of primary images (35) to an intermediate image (45), the intermediate image (45) comprising a plurality of elements (47), each element (47) corresponding to a pixel of one or more of the primary images (35),
wherein the consolidating comprises applying a weighted attention mask to at least one of the intermediate images (45), wherein the weighted attention mask is an output of a second trained artificial neural net, ANN (40B),
the second ANN (40B) being trained (a) to ignore contaminations of the at least one intermediate image (45), and (b) to pay more or less attention to different parts of each intermediate image (45), depending on the primary image (35) and/or on a part of the intermediate image (45),
the second ANN (40B) being trained by:
providing a first intermediate image (45) of the at least one agricultural field (70) with a contamination;
providing a second intermediate image (45) of the at least one agricultural field (70) without the contamination; and
building the weighted attention mask, by attributing each difference between the first intermediate image (45) and the second intermediate image (45) with a low weight of the weighted attention mask;
classifying each element (47) of the intermediate image (45) by applying a probability of being a boundary element; and
constructing a representation of the boundary (65) of the agricultural field (70) in a polygon-based format, based on connecting at least a subset of the boundary elements, as a basis for geospatial applications, particularly for controlling agricultural machinery.

2. The method of claim 1, further comprising the step of:
classifying each non-boundary element as at least one of:
agricultural area element, non-agricultural area element, forest element, urban area element, water body element, background element, noise element, undefined element and/or other element.

3. The method of claim 1 or 2,
wherein the classifying is performed by a first trained artificial neural net, ANN (50).

4. The method any one of the preceding claims,
wherein the optical satellite data comprise data, particularly multispectral data, at least of the Sentinel-2 bands B02, B03, B04, and/or B08, and/or the optical satellite data comprise primary images (35) of a sequence of moments (t1, t2, t3).

5. The method any one of the preceding claims, further comprising the step of:
before or during the consolidating, pre-processing the primary images (35), wherein the pre-processing comprises at least one of:
image pre-selection, atmospheric correction, dehazing, co-location, resampling, reprojection, subsetting, mosaicking and/or orthorectification.

6. The method any one of the preceding claims,
wherein the primary images (35) and/or the intermediate images (45) are divided into tiles (30a - 30d).

7. The method any one of the preceding claims, further comprising the step of:
before the consolidating, geo-locating the primary images (35) and/or the intermediate image (45), and/or
attributing the primary images (35) and/or the intermediate image (45) with ground truth labels.

8. The method any one of the preceding claims, wherein the consolidating comprises at least one of:
overlaying multispectral and/or temporally sequential data of the primary images (35);
averaging the multispectral and/or temporally sequential data of the primary images (35).

9. The method any one of the preceding claims, wherein the constructing the boundary of the agricultural field (70) comprises at least one of:
optionally, after the classifying step, selecting the boundary elements of the intermediate image (45);
optionally, after the constructing step, dividing the intermediate image (45), by means of the boundary elements, into the at least one agricultural field (70);
optionally, as part of the constructing step, connecting, for each agricultural field (70), the boundary elements to a boundary polygon; and/or
optionally, as part of the constructing step, geo-locating the boundary polygon.

10. A computer-implemented method for building a first artificial neural net, ANN (50), for classifying an element of an intermediate image (45), the method comprising the steps of:
geo-locating an intermediate image (45) of the at least one agricultural field (70);
providing a cropland reference map related the agricultural field (70); and
matching the cropland reference map to the agricultural field (70).

11. A program element for executing the method of any one of claims 1 to 9, when running the program element on a processing unit.

12. A computer-readable storage medium where a computer program element according to claim 11 is stored on.

13. Use of a method according to any one of the claims 1 to 9 for geospatial applications, particularly for crop type classification, pest/disease detection, risk assessment, plant health monitoring, yield estimation, and/or for crop management, particularly for controlling seed, fertilization, irrigation, and/or harvest planning.
